Europäisches Patentamt

European Patent Office

Office européen des brevets

(19)

(11) Publication number: **0 118 631**
**B1**

(12) **EUROPEAN PATENT SPECIFICATION**

(45) Date of publication of patent specification: **01.06.88**

(51) Int. Cl.⁴: **C 08 F 14/06**

(21) Application number: **83301354.3**

(22) Date of filing: **11.03.83**

(54) **Process for producing vinyl chloride polymers.**

(43) Date of publication of application:
**19.09.84 Bulletin 84/38**

(45) Publication of the grant of the patent:
**01.06.88 Bulletin 88/22**

(84) Designated Contracting States:
**DE FR GB**

(56) References cited:
**DE-A-2 001 104**
**DE-A-2 023 303**
**FR-A-2 167 254**

(73) Proprietor: **Chisso Corporation**
**6-32, Nakanoshima 3-chome Kita-ku**
**Osaka-shi Osaka-fu (JP)**

(72) Inventor: **Yamada, Tetsuya**
**16-7, Misora 3-chome**
**Yotsukaidoshi Chibaken (JP)**
Inventor: **Koga, Shigehiro**
**20-8, Wakamiya 4-chome**
**Ichiharashi Chibaken (JP)**
Inventor: **Uemura, Katsuoki**
**91-16, Iwasaki**
**Ichiharashi Chibaken (JP)**
Inventor: **Satomi, Katsuhiro**
**91-8, Anesaki**
**Ichiharashi Chibaken (JP)**
Inventor: **Nakano, Kazuaki**
**8-11, Jinnai 2-chome**
**Minamatashi Kumamotoken (JP)**

(74) Representative: **Ruffles, Graham Keith et al**
**MARKS & CLERK 57-60 Lincoln's Inn Fields**
**London WC2A 3LS (GB)**

## Description

### Background of the Invention

Field of the invention

This invention relates to a process for producing vinyl chloride polymers having a high polymerization degree by copolymerizing vinyl chloride monomer with a crosslinking agent.

Description of the prior art

Processes so far known for commercially producing vinyl chloride polymers having a high polymerization degree include not only a polymerization process merely by lowering the polymerization temperature, but also a process of copolymerizing vinyl chloride with a crosslinking agent such as diallyl esters of dibasic acids e.g. diallyl phthalate to obtain vinyl chloride polymers containing branched chains or crosslinked molecular species (Japanese patent publication No. Sho 42—9671/1967). Polymers obtained according to the above process are of a high extent crosslinked structure, that is, contain a considerably large amount of gel insoluble in organic solvents in which conventional vinyl chloride polymers are soluble; thus it is known that the polymers exhibit specific values of physical properties and have various improved characteristic properties.

Improvements in such characteristic properties includes those in mechanical properties, thermal properties, chemical resistance, combustion characteristic properties, etc. Thus, in order to obtain such characteristic properties, that is, those with which polymers of crosslinked structure are to be furnished, it is preferred that the polymers contain gelling portion in an amount as large as possible, and further the process for producing such polymers is preferred to be capable of optionally adjusting the gelling portion in accordance with the desired characteristic properties in a necessary polymerization degree.

However, in the above case of diallyl phthalate (hereinafter abbreviated to DAP), if the polymerization is carried out with varied contents of DAP at a definite temperature and the polymerization degree of a tetrahydrofuran-soluble portion and the content of a tetrahydrofuran-insoluble portion are measured, then the content of gelling portion is low in a small amount of DAP, whereas it increases rapidly in a certain amount of DAP. Further the polymerization degree varies greatly depending on the amount of DAP and increases rapidly in a certain amount of DP. These facts raise problems at the time of polymerization and molding and processing. Namely when the amount of DAP is small, it is impossible to obtain characteristic properties of crosslinked structure, and when the amount increases, the polymerization degree increases rapidly depending on the amount of DAP to make it difficult to maintain the polymerization degree at a constant value, and also processability is inferior due to too high polymerization degree. When the amount of DAP further increases, it is possible to obtain characteristic properties with which polymers of crosslinked structure are to be furnished, but it is impossible to obtain processed products of smooth surface. Furthermore, polymers having an adequate content of insoluble portion and also having a polymerization degree of 1,000 or less cannot be obtained; hence it is impossible to develop the application fields of such polymers toward the fields of rigid products of plasticizer-free vinyl chloride polymer resins.

In order to solve these various problems, the present inventors have made strenuous studies and completed the present invention.

An object of the present invention is to provide a process for producing vinyl chloride polymers by copolymerizing vinyl chloride monomer with a crosslinking agent wherein the polymerization degree is kept at a constant value without being affected by the amount of the crosslinking agent and also it is possible to adjust the content of tetrahydrofuran-insoluble polymer within a broad range.

Another object of the present invention is to provide polymers having characteristic properties with which polymers of crosslinked structure are to be furnished and also capable of affording processed products of smooth surface, and also not only polymers having a polymerization degree of 1,000 or more and also containing a suitable amount of tetrahydrofuran-insoluble polymer but also polymers having a polymerization degree less than 1,000 and useful for rigid products without any plasticizer.

### Summary of the invention

The present invention resides in: a process for producing vinyl chloride polymers by copolymerizing vinyl chloride monomer with a crosslinking agent, which process comprises suspension copolymerizing 100 parts by weight of vinyl chloride monomer with 0.1 to 3 parts by weight of a crosslinking agent consisting of at least one member selected from the group consisting of polytetramethylene ether glycol diacrylates and polyneopentyl adipate glycol diacrylates, having an average molecular weight of 200 to 8,000, while maintaining the copolymerization temperature at a constant value in the range of 30°C to 70°C.

The use of dimethylacrylates of polyethylene glycol or of polypropylene glycol in a pre-polymerization step of a bulk polymerization of vinyl chloride is described in French 2 167 254, where the aim is to achieve a large average particle diameter and a narrow particle size distribution.

### Brief description of the drawings

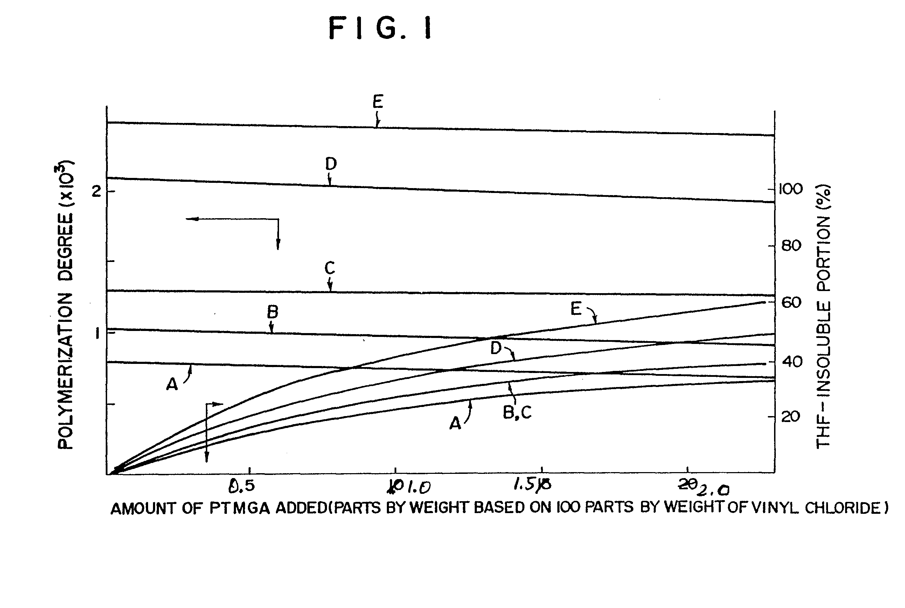

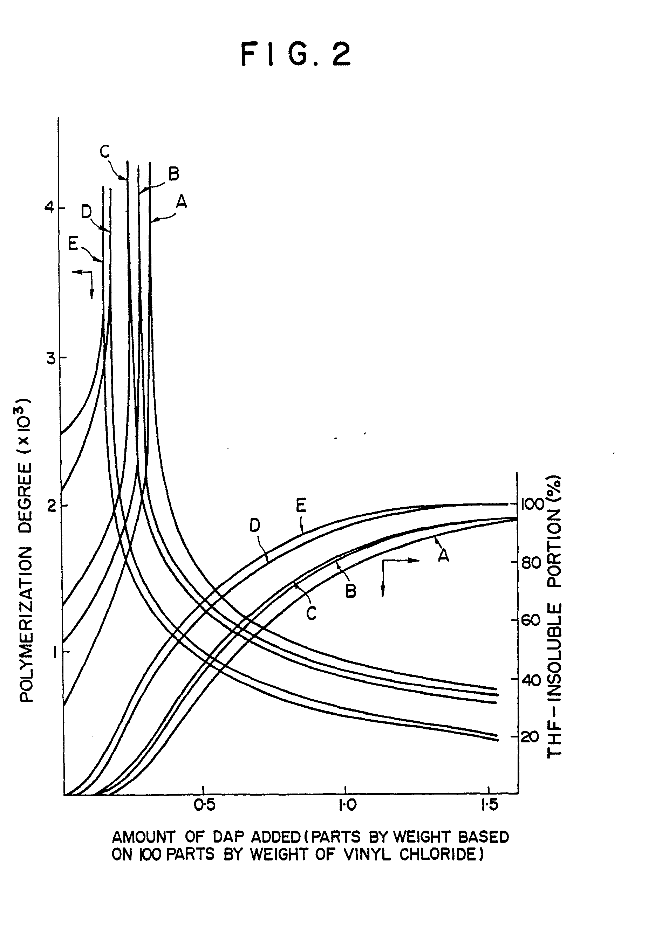

Fig. 1 shows the relationship of the amount of a crosslinking agent polytetramethylene ether glycol diacrylate (PTMGA) added, relative to the polymerization degree of tetrahydrofuran (THF)-soluble polymer

2

and the content of THF-insoluble portion. Fig. 2 shows the relationship of the amount of a usual crosslinking agent DAP relative to the above polymerization degree and the above content.

Description of the preferred embodiments

The crosslinking agent used in the process of the present invention is preferred to be at least one member selected from the group consisting of polytetramethylene ether glycol diacrylate, having an average polymerization degree of 5 to 30, or/and polyneopentyl adipate glycol having an average polymerization degree 2 to 10.

The average molecular weight of the crosslinking agent of the present invention is in the range of 200 to 8,000, preferably 340 to 4,000, more preferably 340 to 2,400. If the weight is less than 200, the molecular weight of vinyl chloride polymers is liable to vary depending on the amount of the crosslinking agent to make it difficult to obtain those having a definite molecular weight. As for the average polymerization degree of the polyether glycol, the number average polymerization degree, ("n"), is suitably in the range of 2 to 100, preferably 5 to 50, more preferably 5 to 30. As for the average molecular weight of the polyester glycol, ("m"), the number average polymerization degree is suitably in the range of 2 to 40, preferably 2 to 20, more preferably 2 to 10. Values of n or m less than 2 are undesirable, since similar drawbacks to those in the case of DAP occur; on the other hand, if n exceeds 100 or m exceeds 40, the reactivity at the time of crosslinking polymerization of the diacrylates raises a problem and also the lubricating properties at the time of molding and processing of the resulting polymers become excessive, hence such higher values also raise a problem.

The amount of the crosslinking agent used is 0.1 to 3 parts by weight based on 100 parts by weight of vinyl chloride monomer. If it is less than 0.1 part by weight, the content of the insoluble portion is so low that it is impossible to obtain characteristic properties with which polymers of crosslinked structure are to be furnished. If it exceeds 3 parts by weight, processability is inferior and it is impossible to obtain molded products of smooth surface.

Crosslinking agents other than those of the present invention such as diallyl adipate, diallyl maleate, triallyl cyanurate, triallyl phosphate divinylbenzene, divinyl ether, etc. are undesirable since they exhibit similar behaviors to those in the case of DAP.

As to the production process of the present invention, polymerization is carried out at a definite temperature established within a range of 30°C to 70°C. The resulting polymers have a polymerization degree of 350 to 5,000. At higher temperatures than 70°C, polymers of a lower polymerization degree are obtained and characteristic properties of vinyl chloride polymer resins are not obtained. On the other hand, at lower temperatures than 30°C, the polymerization degree is so high that processing in conventional manner becomes difficult.

Vinyl chloride monomer used in the present invention includes not only vinyl chloride monomer alone, but also mixtures thereof with vinyl monomers copolymerizable therewith, composed mainly of vinyl chloride monomer. Such copolymerizable vinyl monomers are well known to persons skilled in the art and examples thereof are olefins such as ethylene, propylene, etc., vinyl esters such as vinyl acetate, etc., vinyl ethers such as ethyl vinyl ether, cetyl vinyl ether, etc., acrylic acid esters, maleic acid or furmaric acid esters and anhydrides thereof, aromatic vinyl compounds such as styrene, acrylonitrile, etc.

Polymerization initiators and other additives (dispersant, emulsifiers, etc.) used in the polymerization of the present invention may be not those which are specified and particular, but those which are well known and generally used by persons skilled in the art. Examples of dispersants and emulsifiers are protective colloid type chemicals or natural high molecular compounds such as partially saponified products of polyvinyl acetate, acrylic acid copolymers, maleic anhydride copolymers, cellulose derivatives, gelatin, starch, etc., non-ionic emulsifiers such as esters of higher fatty acids with polyols, polyoxyethylene derivatives, etc., anionic emulsifiers such as metal salts of higher fatty acids, metal salts of sulfuric acid esters of higher alcohols, etc. Eamples of polymerization initiators are organic peroxides such as benzoyl peroxide, lauroyl peroxide, dioctyl peroxydicarbonate, di-3-methoxybutyl peroxycarbonate, acetylcyclohexylsulfonyl peroxide, etc., azo compounds such as azobisisobutyronitrile, $\alpha,\alpha'$-azobis-2,4-dimethyl-valeronitrile, etc., persulphates such as potassium persulfate, ammonium persulfate, etc. Addition of known additives used together with suspending agents or emulsifiers to the polymerization system does not harm the effectiveness of the present invention. When polymers having a lower polymerization degree (600 or less) are produced in the present invention, chain transfer agents may be used as in the case of usual polymerization.

The effectiveness of the production process of the present invention is that the tetrahydrofuran-soluble portion of the resulting vinyl chloride polymers has a constant polymerization degree independently of the amount of crosslinking agents, and further that the content of the tetrahydrofuran-insoluble polymer (polymer of crosslinked structure) does not increase rapidly in a certain amount of crosslinking agents unlike the case of DAP. This it is possible to adjust the content of the gelling portion (polymer of crosslinked structure) within a broad range thereof, with each grade of polymers having various polymerization degrees. Namely, mere variation of the amount of crosslinking agent used at a definite temperature may be sufficient.

Thus it is possible for the polymers obtained according to the present invention, to provide the most suitable material for application fields over a range from those of plasticizer-free, rigid molded products to

3

those of super-flexible molded products containing a large amount of plasticizer. If a rigid sheet exhibiting characteristic properties with which polymers of crosslinked structure are to be furnished is needed, it is possible to provide polymers having a polymerization degree of 700 to 800 and a gel content of 5 to 50%, and similarly if a flexible molded product is needed, it is possible to provide polymers having a polymerization degree of 1,000 to 1,300, while if an elastomeric molded product is needed, it is possible to provide polymers having a polymerization degree of 2,000 to 3,000. Further it is also possible to use polymers containing a gelling portion of 50% or more together with usual vinyl chloride polymers in admixture. This case, however, is disadvantageous in the aspect of physical properties since uniform mixing is difficult; thus it is preferable to carry out copolymerization so as to contain a required amount of gelling portion in the resulting copolymer and use this copolymer alone. In other words, the production process of the present invention can be also referred to as a process capable of optionally deriving characteristic properties with which polymers of crosslinked structure are to be furnished, correspondingly to uses.

The effectiveness of the present invention will be described by way of examples (Examples and Comparative examples). The polymerization degree of the tetrahydrofuran-soluble portion of the copolymers obtained in the examples and the content of the tetrahydrofuran-insoluble portion of the copolymers were measured according to the following methods:

Polymerization degree: according to the method of JIS K—6721.

Tetrahydrofuran-insoluble portion (%) (hereinafter abbreviated to insoluble portion): A sample (3 g) was allowed to stand in tetrahydrofuran for 12 hours, followed by subjecting the resulting material to a high-speed centrifugal separator (8,000 revolutions, 10 minutes), washing the insoluble portion with tetrahydrofuran and drying in vacuo (50°C, 10 hours or longer), to measure the value of the portion.

Further, the resulting copolymers were molded under the conditions listed in the following Table:

Table

| | | Examples and Comparative examples | |
|---|---|---|---|
| | | A, B and C | D and E |
| Composition | Polymer formed (parts by weight) | 100 | 100 |
| | DOP ( " ) | 90 | 90 |
| | Technical calcium carbonate ( " ) | 30 | 20 |
| | Ca-Zn composite stabilizer ( " ) | 2 | 2 |
| | Black pigment ( " ) | 0.2 | 0.2 |
| Blending | 75 ℓ Henschel mixer | | |
| | Dry-up temp. (°C) | 110 | 110 |
| | Number of revolutions (rpm) | 820 ~ 1640 | 820 ~ 1640 |
| Granulation | 65 mm Extruder | | |
| | Number of revolutions (rpm) | 40 | 40 |
| | Cylinder temperature (°C) | | |
| | $C_1$ | 105 | 110 |
| | $C_2$ | 115 | 120 |
| | $C_3$ | 120 | 130 |
| | Die temp. (°C) | 130 | 145 |
| Molding | 40 mm Extruder | | |
| | Number of revolutions (rpm) | 40 | 40 |
| | Cylinder temperature (°C) | | |
| | $C_1$ | 140 | 140 |
| | $C_2$ | 155 | 165 |
| | $C_3$ | 170 | 180 |
| | Die temp. (°C) | 180 | 190 |

Processability, delustering extent and characteristic properties of molded products were evaluated according to the following methods:

Processability;

A belt-form extrudate was prepared under the conditions listed in the Table and the surface state was observed. The evaulation standards are as follows:

○ ...... Smooth surface

◍ ...... Somewhat smooth surface

△ ...... Partly projected and depressed surface

× ...... Surface has a large number of projections and depressions.

Delustering extent:

The above belt-form extrudate was observed and evaluated under the following standards:

×× ...... Roughened surface

× ...... Lustrous

△ ...... Somewhat lustrous

○ ...... Good delustering

◎ ...... Very good delustering

Characteristic properties (with which polymers of crosslinked structure are to be furnished):

The mechanical characteristic properties (tensile, impact strengths, etc.), thermal characteristic properties (heat shrinkage, etc.), chemical resistance (resistance to solvent), life (stress cracking, etc.) and combustion characteristic properties (reduction in drip) were collectively observed.

○ ...... Characteristic properties with which polymers of crosslinked structure are to be furnished were exhibited.

△ ...... The characteristic properties were partly exhibited.

× ...... The characteristic properties were not exhibited at all.

×× ...... Processing was impossible.

Examples and Comparative examples (A)

Into a 200 l capacity stainless polymerization vessel were fed purified water (200 parts by weight), a partially saponified polyvinyl acetate (0.2 part by weight), α,α'-azobis 2,4-dimethylvaleronitrile (0.035 part by weight) and a crosslinking agent (a given amount), followed by deaerating the mixture in vacuo with stirring, then feeding vinyl chloride (100 parts by weight) and raising.the temperature up to 63°C with stirring to polymerizable vinyl chloride. When the percentage polymerization reached a range of 86 to 90%, unreacted monomer was discharged and the resulting copolymer was washed with water, dehydrated and dried. Physical properties of the copolymer and characteristic properties of molded product therefrom were measured. The results are shown in Table A.

Examples and Comparative examples (B)

Examples and Comparative examples (A) were repeated except that dioctyl peroxydicarbonate (0.03 part by weight) was used as an initiator and the temperature was 57°C. The results are shown in Table B.

Examples and Comparative examples (C)

Examples and Comparative examples (A) were repeated except that di-3-methoxybutyl perooxydicarbonate (0.025 part by weight) and acetylcyclohexylsulfonyl peroxide (0.01 part by weight) were used as initiators and the temperature was 52°C. The results are shown in Table C.

6

| Run | Polymer-ization temper-ature (°C) | Crosslinking agent | | Copolymer | | Molded product | | | Note |
|---|---|---|---|---|---|---|---|---|---|
| | | Kind | Part by weight * | Polymer-ization degree | Insoluble portion (%) | Process-ability | Deluster-ing property | Charac-teristic properties | |
| A-1 | 63 | PTMGA** | 0 | 800 | 0 | o | × | × | Compar. ex. |
| " 2 | " | " | 0.05 | 810 | 0 | o | × | × | " |
| " 3 | " | " | 0.1 | 800 | 0 | o | Δ | × | Example |
| " 4 | " | " | 0.2 | 830 | 5.7 | o | Δ | Δ | " |
| " 5 | " | " | 0.5 | 780 | 15 | o | ◎ | o | " |
| " 6 | " | " | 1.0 | 770 | 22.2 | o | ◎ | o | " |
| " 7 | " | " | 2.0 | 760 | 32.0 | o | ◎ | o | " |
| " 8 | " | " | 3.0 | 760 | 35.0 | Δ | ◎ | Δ | " |
| " 9 | " | DAP | 0.05 | 920 | 0 | o | × | × | Compar. ex. |
| " 10 | " | " | 0.1 | 990 | 0 | o | × | × | " |
| " 11 | " | " | 0.2 | 1220 | 2.0 | o | × | × | " |
| " 12 | " | " | 0.5 | 1500 | 36.0 | × | o | Δ | " |
| " 13 | " | " | 1.0 | 920 | 77.0 | × | ×× | ×× | " |
| " 14 | " | " | 1.3 | 800 | 92.0 | × | ×× | ×× | " |

\* Based on 100 parts by weight of vinyl chloride (this applies to the following Tables)

\*\* Polytetramethylene ether glycol diacrylate (n = 10, this applies to the following Tables).

| Run | Polymer-ization temper-ature (°C) | Crosslinking agent | | Copolymer | | Molded product | | | Note |
|-----|-----|-----|-----|-----|-----|-----|-----|-----|-----|
| | | Kind | Part by weight * | Polymer-ization degree | Insoluble portion (%) | Process-ability | Deluster-ing property | Charac-teristic properties | |
| B-1 | 57 | PTMGA** | 0 | 1030 | 0 | o | × | × | Compar. ex. |
| " 2 | " | " | 0.05 | 1040 | 0.3 | o | × | × | " |
| " 3 | " | " | 0.1 | 1000 | 3.0 | o | Δ | Δ | Example |
| " 4 | " | " | 0.2 | 1040 | 7.5 | o | o | o | " |
| " 5 | " | " | 0.5 | 1030 | 17.0 | o | ◎ | o | " |
| " 6 | " | " | 1.0 | 1000 | 27.4 | o | ◎ | o | " |
| " 7 | " | " | 2.0 | 980 | 39.0 | o | ◎ | Ⓐ | " |
| " 8 | " | " | 3.0 | 980 | 42.1 | Δ | ◎ | Δ | " |
| " 9 | " | DAP | 0.05 | 1150 | 0 | o | × | × | Compar. ex. |
| " 10 | " | " | 0.1 | 1320 | 0 | o | × | × | " |
| " 11 | | " | 0.2 | 1740 | 5.0 | × | Δ | × | " |
| " 12 | " | " | 0.3 | 2200 | 15.0 | × | o | o | " |
| " 13 | " | " | 0.4 | 1580 | 30.0 | × | ◎ | o | " |
| " 14 | " | " | 0.5 | 1350 | 43.0 | × | ◎ | o | " |
| " 15 | " | " | 0.7 | 1050 | 65 | × | ×× | ×× | " |
| " 16 | " | " | 1.0 | 860 | 83.0 | × | ×× | ×× | " |

Table C

| Run | Polymer-ization temper-ature (°C) | Crosslinking agent | | Copolymer | | Molded product | | | Note |
|---|---|---|---|---|---|---|---|---|---|
| | | Kind | Part by weight * | Polymer-ization degree | Insoluble portion (%) | Process-ability | Deluster-ing property | Charac-teristic properties | |
| C-1 | 52 | PTMGA** | 0 | 1300 | 0 | o | × | × | Compar. ex. |
| " 2 | " | " | 0.05 | 1310 | 2.0 | o | × | × | " |
| " 3 | " | " | 0.1 | 1350 | 4.6 | o | Δ | Δ | Example |
| " 4 | " | " | 0.2 | 1340 | 9.8 | o | o | o | " |
| " 5 | " | " | 0.5 | 1300 | 17.8 | o | ◎ | o | " |
| " 6 | " | " | 1.0 | 1270 | 26.5 | o | ◎ | o | " |
| " 7 | " | " | 2.0 | 1270 | 40.0 | o | ◎ | Ⓐ | " |
| " 8 | " | " | 3.0 | 1250 | 43.0 | Δ | ◎ | Δ | " |
| " 9 | " | DAP | 0.05 | 1420 | 0.5 | o | × | × | Compar. ex. |
| " 10 | " | " | 0.1 | 1600 | 0.5 | o | × | × | " |
| " 11 | " | " | 0.2 | 2100 | 6.0 | × | Δ | Δ | " |
| " 12 | " | " | 0.25 | 3980 | 11.0 | × | o | Δ | " |
| " 13 | " | " | 0.4 | 1500 | 36.0 | × | ◎ | o | " |
| " 14 | " | " | 0.5 | 1280 | 44 | × | ×× | ×× | " |
| " 15 | " | " | 1.0 | 800 | 86 | × | ×× | ×× | " |

Examples and Comparative examples (D)

Examples and Comparative examples (A) were repeated except that acetylcyclohexylsulfonyl peroxide (0.03 part by weight) was used as an initiator and the temperature was 41.5°C. The results are shown in Table D.

Examples and Comparative examples (E)

Examples and Comparative examples (A) were repeated except that acetylcyclohexylsulfonyl peroide (0.035 part by weight) was used as an initiator and the temperature was 39.5°C. The results are shown in Table E.

## Table D

| Run | Polymer-ization temper-ature (°C) | Crosslinking agent | | Copolymer | | Molded product | | | Note |
|---|---|---|---|---|---|---|---|---|---|
| | | Kind | Part by weight * | Polymer-ization degree | Insoluble portion (%) | Process-ability | Deluster-ing property | Charac-teristic properties | |
| D-1 | 41.5 | PTMGA** | 0 | 2100 | 0 | Ⓐ | × | × | Compar. ex. |
| " 2 | " | " | 0.05 | 2110 | 2.3 | Ⓐ | × | × | " |
| " 3 | " | " | 0.1 | 2100 | 5.0 | o | × | × | Example |
| " 4 | " | " | 0.2 | 2050 | 10.0 | o | Ⓐ | o | " |
| " 5 | " | " | 0.5 | 2010 | 22.0 | o | ◎ | o | " |
| " 6 | " | " | 1.0 | 2020 | 33.2 | o | ◎ | o | " |
| " 7 | " | " | 2.0 | 2000 | 47.0 | Δ | ◎ | Δ | " |
| " 8 | " | " | 3.0 | 2000 | 56.5 | × | ×× | Δ | " |
| " 9 | " | DAP | 0.05 | 2310 | 1.0 | o | × | × | Compar. ex. |
| " 10 | " | " | 0.1 | 2520 | 5.0 | o | Δ | Δ | " |
| " 11 | " | " | 0.15 | 3000 | 10.0 | o | o | o | " |
| " 12 | " | " | 0.2 | 2000 | 20.0 | o | o | o | " |
| " 13 | " | " | 0.3 | 1400 | 40.0 | Δ | ◎ | o | " |
| " 14 | " | " | 0.5 | 990 | 63.0 | × | ×× | ×× | " |
| " 15 | " | " | 1.0 | 600 | 92.0 | × | ×× | ×× | " |

Table E

| Run | Polymer-ization temper-ature (°C) | Crosslinking agent | | Copolymer | | Molded product | | | Note |
|---|---|---|---|---|---|---|---|---|---|
| | | Kind | Part by weight * | Polymer-ization degree | Insoluble portion (%) | Process-ability | Deluster-ing property | Charac-teristic properties | |
| E-1 | 39.5 | PTMGA** | 0 | 2500 | 0 | Ⓐ | Δ | × | Compar. ex. |
| " 2 | " | " | 0.05 | 2520 | 3.0 | Ⓐ | Δ | × | " |
| " 3 | " | " | 0.1 | 2490 | 6.5 | o | Ⓐ | Δ | Example |
| " 4 | " | " | 0.2 | 2400 | 13.4 | o | o | o | " |
| " 5 | " | " | 0.5 | 2450 | 26.7 | o | ◎ | o | " |
| " 6 | " | " | 1.0 | 2450 | 41.0 | o | ◎ | o | " |
| " 7 | " | " | 2.0 | 2400 | 57.5 | Δ | ◎ | Δ | " |
| " 8 | " | " | 3.0 | 2380 | 67.0 | × | ×× | Δ | " |
| " 9 | " | DAP | 0.05 | 2570 | 3.4 | o | Δ | × | Compar. ex. |
| " 10 | " | " | 0.1 | 2710 | 7.0 | Δ | o | Δ | " |
| " 11 | " | " | 0.15 | 2500 | 15.0 | o | ◎ | Δ | " |
| " 12 | " | " | 0.2 | 1750 | 25.0 | o | ◎ | × | " |
| " 13 | " | " | Q.3 | 1300 | 43.0 | o | ◎ | o | " |
| " 14 | " | " | 0.5 | 920 | 67.0 | × | ×× | ×× | " |
| " 15 | " | " | 0.8 | 650 | 87.0 | × | ×× | ×× | " |

0 118 631

The relationship of the polymerization degree of the tetrahydrofuran-soluble polymer of the copolymers of the above Examples and Comparative examples A ~ E and the content (%) of the tetrahydrofuran-insoluble portion of the copolymers, relative to the amount of crosslinking agent added at the time of copolymerization are illustrated in the accompanying drawings. Fig. 1 shows the case of crosslinking agent PTMGA and Fig. 2 shows the case of DAP. First, as to the relationship between the amount of crosslinking agent added and the polymerization degree, it is seen from Fig. 1 that in the case of the present invention, the polymerization degree is constant irrespectively of the amount of crosslinking agent added, whereas it is seen from Fig. 2 that in the case of DAP, there is a drawback that when its amount added reaches a certain amount, the polymerization degree rapidly increases.

Next, as to the relationship between the amount of crosslinking agent added and the content of the tetrahydrofuran-insoluble portion, it is seen that as its amount added increases, the content gradually increases, and by merely varying the amount of crosslinking agent added, it is possible to optionally adjust the content of the insoluble portion of copolymer. Whereas in the case of DAP of Fig. 2, if its amount added is small, the amount of the insoluble portion is small and rapidly increases in a certain amount of the amount added; hence it is seen that it is very difficult to optionally adjust the content of the insoluble portion at a certain polymerization degree.

Examples and Comparative examples (F)

Examples and Comparative examples (B) were repeated except that the crosslinking agent was replaced by diacrylate of polyester polyol of adipic acid with neopentyl glycol (n = 5) (hereinafter abbreviated to PEsDA) or triallyl cyanurate (hereinafter abbreviated to TAC). The results are shown in Table F.

0 118 631

## Table F (2)

| Run | Polymerization temperature (°C) | Crosslinking agent | | Copolymer | | Molded product | | Note |
|---|---|---|---|---|---|---|---|---|
| | | Kind | Part by weight * | Polymerization degree | Insoluble portion (%) | Process-ability | Deluster-ing property | |
| F-1 | " | PE$_s$DA | 0 | ·1040 | 0 | o | × | Compar. ex. |
| " 2 | " | " | 0.05 | 1020 | 0.3 | o | × | " |
| " 3 | " | " | 0.1 | 1030 | 3.0 | o | Δ | Example |
| " 4 | " | " | 0.2 | 1020 | 9.0 | o | o | " |
| " 5 | " | " | 0.5 | 990 | 19.5 | o | ◎ | " |
| " 6 | " | " | 1.0 | 1000 | 31.2 | o | ◎ | " |
| " 7 | " | " | 2.0 | 980 | 45.0 | Δ | ◎ | " |
| " 8 | " | " | 3.0 | 980 | 52.6 | × | ◎ | " |

### Table F (3)

| Run | Polymer-ization temperature (°C) | Crosslinking agent | | Copolymer | | Molded product | | Note |
|---|---|---|---|---|---|---|---|---|
| | | Kind | Part by weight * | Polymer-ization degree | Insoluble portion (%) | Process-ability | Deluster-ing properties | |
| F- 9 | " | TAC | 0.05 | 1180 | 2.0 | o | × | Compar. ex. |
| " 10 | " | " | 0.1 | 1340 | 8.0 | o | × | " |
| " 11 | " | " | 0.2 | 1800 | 11.0 | × | Δ | " |
| " 12 | " | " | 0.3 | 2100 | 22.0 | × | o | " |
| " 13 | " | " | 0.4 | 1600 | 36.5 | × | ◎ | " |
| " 14 | " | " | 0.5 | 1350 | 48.0 | × | ◎ | " |
| " 15 | " | " | 1.0 | 840 | 85.0 | × | ×× | " |

0 118 631

**0 118 631**

**Claims**

1. A process for producing vinyl chloride polymers by copolymerizing vinyl chloride monomer with a crosslinking agent, which comprises suspension copolymerization of 100 parts by weight of vinyl chloride monomer with 0.1 to 3 parts by weight of a crosslinking agent which comprises polytetramethylene ether glycol diacrylate and/or polyneopentyl adipate glycol diacrylate, having an average molecular weight of 200 to 8,000, while maintaining the copolymerization temperature at a constant value in the range of 30°C to 70°C.

2. A process according to claim 1, wherein the polytetramethylene glycol diacrylate has an average polymerization degree of 5 to 30.

3. A process according to claim 1, wherein the polyneopentyl adipate glycol diacrylate has an average polymerization degree of 2 to 10.

**Patentansprüche**

1. Verfahren zur Herstellung von Vinylchloridpolymeren durch Copolymerisation von monomerem Vinylchlorid mit einem Vernetzungsmittel, dadurch gekennzeichnet, daß man in Suspension 100 Gew.-Teile monomeres Vinylchlorid mit 0,1 bis 3 Gew.-Teilen eines Vernetzungsmittels, das Polytetramethylenetherglykoldiacrylat und/oder Polyneopentyladipatglykoldiacrylat mit einem durchschnittlichen Molekulargewicht von 200 bis 8.000 umfaßt, copolymerisiert und die Copolymerisationstemperatur bei einem konstanten Wert im Bereich von 30°C bis 70°C hält.

2. Verfahren gemäß Anspruch 1, dadurch gekennzeichnet, daß das Polytetramethylglykoldiacrylat einen durchschnittlichen Polymerisationsgrad von 5 bis 30 hat.

3. Verfahren gemäß Anspruch 1, dadurch gekennzeichnet, daß das Polyneopentyladipatglykoldiacrylat einen durchschnittlichen Polymerisationsgrad von 2 bis 10 hat.

**Revendications**

1. Procédé de préparation de polymères du chlorure de vinyle par copolymérisation du chlorure de vinyle monomère avec un agent de réticulation, caractérisé par le fait qu'il comprend une copolymérisation en suspension de 100 parties en poids de chlorure de vinyle monomère avec 0,1 à 3 parties en poids d'un agent de réticulation qui comprend du diacrylate de polytétraméthylène éther glycol et/ou de diacrylate de polynéopentyle adipate glycol, ayant une masse moléculaire moyenne de 200 à 8000, tout en maitenant la température de copolymérisation à une valeur constante dans l'intervalle de 30 à 70°C.

2. Procédé selon la revendication 1, dans lequel le diacrylate de polytétraméthylène glycol a un degré de polymérisation moyen de 5 à 30.

3. Procédé selon la revendication 1, dans lequel le diacrylate de polynéopentyle adipate glycol a un degré de polymérisation moyen de 2 à 10.

# F I G. 1

# FIG. 2

AMOUNT OF DAP ADDED (PARTS BY WEIGHT BASED
ON 100 PARTS BY WEIGHT OF VINYL CHLORIDE)